(19) Europäisches Patentamt
European Patent Office
Office européen des brevets

(11) **EP 3 306 236 B1**

(12) **EUROPEAN PATENT SPECIFICATION**

(45) Date of publication and mention
of the grant of the patent:
**19.01.2022 Bulletin 2022/03**

(51) International Patent Classification (IPC):
***F25B 49/00*** *(2006.01)*     ***F25B 49/02*** *(2006.01)*

(21) Application number: **17189571.7**

(52) Cooperative Patent Classification (CPC):
**F25B 49/005; F25B 49/022;** F25B 2500/16

(22) Date of filing: **06.09.2017**

(54) **A DEVICE FOR DETECTING A NON-OPTIMAL LUBRICATION CONDITION IN A COMPRESSOR OF A REFRIGERATION SYSTEM, A COMPRESSOR UNIT WHICH COMPRISES THE DEVICE AND A METHOD FOR DETECTING A NON-OPTIMAL LUBRICATION CONDITION IN A COMPRESSOR OF A REFRIGERATION SYSTEM**

VORRICHTUNG ZUM ERFASSEN EINER NICHT-OPTIMALEN SCHMIERZUSTAND IN EINEM KOMPRESSOR EINES KÜHLSYSTEMS, EINER KOMPRESSOREINHEIT, DIE DIE VORRICHTUNG UMFASST, UND VERFAHREN ZUM NACHWEIS EINES NICHTOPTIMALEN SCHMIERZUSTANDS IN EINEM KOMPRESSOR EINES KÜHLSYSTEMS

DISPOSITIF POUR DÉTECTER UNE CONDITION DE LUBRIFICATION NON OPTIMALE DANS UN COMPRESSEUR D'UN SYSTÈME DE RÉFRIGÉRATION, UNITÉ COMPRESSEUR COMPRENANT LE DISPOSITIF ET PROCÉDÉ DE DÉTECTION D'UNE CONDITION DE LUBRIFICATION NON OPTIMALE DANS UN COMPRESSEUR D'UN SYSTÈME DE RÉFRIGÉRATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2016 IT 201600099499**

(43) Date of publication of application:
**11.04.2018 Bulletin 2018/15**

(73) Proprietor: **Carel Industries S.p.A.**
**35020 Brugine (PD) (IT)**

(72) Inventors:
• **DALAN, Andrea**
 **35020 BRUGINE (PD) (IT)**
• **BIANCHINI, Umberto**
 **35020 BRUGINE (PD) (IT)**

(74) Representative: **De Giorgi, Michele**
**Società Italiana Brevetti S.p.A.**
**Stradone San Fermo, 21/B**
**37121 Verona (IT)**

(56) References cited:
**WO-A1-92/20126**     **WO-A1-2006/107290**
**WO-A1-2014/147625**     **US-A1- 2010 296 914**

**Description**

The present invention relates to a device for detecting a non-optimal lubrication condition in a compressor of a refrigeration system, a compressor unit which comprises the device and a method for detecting a non-optimal lubrication condition in a compressor of a refrigeration system. In particular, the present invention relates to detection of a lubrication condition of a compressor of a refrigeration system which is close to an insufficient lubrication for functioning of the system, the detection preventing malfunctioning of the compressor by effectively detecting critical levels of lubricant in a way that is non-invasive with respect to the compressor. WO-A-92/20126, which corresponds to EP-A-0 536 415, discloses a device having the features of the preamble of claim 1. Further, the present invention has the aim of optimising the functioning of a refrigeration system by optimising the quantity di lubricant in the compressor or compressors present in the system.

Currently, a traditional industrial refrigeration system is generally provided with at least a compressor, for example of a scroll type.

Each compressor has the intake thereof connected to a first branch of the refrigeration system, which is located downstream of an evaporator, and a delivery connected to a second branch of the refrigeration system, which is located upstream of a condenser unit.

The scroll compressors in question structurally have a metal housing which encloses a compression member, made up of compression spirals having a vertical axis, the compression member separating, in the casing, a lower suction compartment from an upper delivery compartment.

The lower compartment serves to collect lubricant oil, which in use is pumped towards the moving components, i.e. towards the bearings and towards the spirals performing the compression work.

In use, following compression the refrigerant fluid draws a fraction of the lubricant from the spirals of the compressor and leads it to flow into the circuit that runs through the refrigeration system.

In use the lubricant should run through the entire circuit before returning to the compressor.

In particular, when the velocity of the refrigerant fluid inside the circuit is low due to the size of the tubing and the circuit components, the lubricant tends to collect in some parts of the circuit with a consequent non-return to the compressor.

This leads to less availability of lubricant in the compressor with respect to the rated quantity.

To measure the quantity of oil present in the compressor and prevent damage or breakage of the compressor deriving from an insufficient lubrication of the moving components thereof, two solutions are currently applied.

A first consists in predisposing a window in the housing of the compressor for visually verifying, or verifying using optic measuring tools, whether the quantity of lubricant is sufficient for correct functioning of the compressor. A second known solution is to include a capacitive probe which extends inside the housing for detecting the level of the oil in the housing.

Both these solutions have the drawback of requiring modifications to the structure of the compressor and in particular the realising of an opening in the housing in which to insert a viewing window or a capacitive probe.

Further, the first above-described solution generally does not enable a reliable automatic continuous control, and is dramatically subject to a variability linked to the subjective interpretation of the visible state inside the housing of the compressor.

Also, this evaluation is inaccurate by effect of the usual presence of bubbles or foam on the surface of the lubricant and by a possible inclination of the compressor.

In other words, at present the verification of the quantity of lubricant present in the compressor is carried out using tools that are invasive of the structure of the compressor.

The problem underpinning the present invention is to simplify the structure of compressors in which during use it is possible to check whether the quantity of lubricant present is sufficient for an efficient functioning of the compressor while at the same time optimising the functioning of the refrigeration system in which the compressor is located.

The main aim of the present invention is to realise a device for detecting a non-optimal lubrication condition in a compressor of a refrigeration system, a compressor unit which comprises the device and a method for detecting a non-optimal lubrication condition in a compressor of a refrigeration system which offer solutions to this issue by overcoming the above-described drawbacks in the currently known solutions.

In the scope of this task an aim of the present invention is to realise a device for detecting a non-optimal lubrication condition in a compressor of a refrigeration system, a compressor unit which comprises the device and a method for detecting a non-optimal lubrication condition in a compressor of a refrigeration system which enable verifying whether a quantity of lubricant in the compressor has fallen below a critical threshold, in a way that is less invasive than the above-described known solutions.

A further aim of the present invention is to realise a device for detecting a non-optimal lubrication condition in a compressor of a refrigeration system, a compressor unit which comprises the device and a method for detecting a non-optimal lubrication condition in a compressor of a refrigeration system which enable prompt detecting of a condition of insufficient lubrication of a compressor, for preventing damage thereto deriving from insufficient lubrication.

A still further aim of the present invention is to provide a device for detecting a non-optimal lubrication condition in a compressor of a refrigeration system, a compressor unit which comprises the device and a method for detecting a non-optimal lubrication condition in a compressor of a refrigeration system, which are more reliable than the traditional solutions described above, in detecting a non-optimal lubrication condition in a compressor.

This task, as well as these and other aims which will emerge more fully below are achieved by a device for detecting a non-optimal lubrication condition in a compressor of a refrigeration system, a compressor unit which comprises the device and a method for detecting a non-optimal lubrication condition in a compressor of a refrigeration system according to the appended independent claims 1 (device for detecting)and 6 (method for detecting).

Detailed characteristics of the device for detecting a non-optimal lubrication condition in a compressor of a refrigeration system, a compressor unit which comprises the device and a method for detecting a non-optimal lubrication condition in a compressor of a refrigeration system according to the invention are set down in the dependent claims.

Further characteristics and advantages of the invention will emerge more clearly from the description of a preferred but not exclusive embodiment of the device for detecting a non-optimal lubrication condition in a compressor of a refrigeration system, a compressor unit which comprises the device and a method for detecting a non-optimal lubrication condition in a compressor of a refrigeration system according to the invention, illustrated by way of non-limiting example in the accompanying figures of the drawings, in which:

- Figure 1 is a simplified diagram of a compressor according to the invention;
- Figure 2 is a diagram showing time values of a signal detected by a device according to the present invention.

With particular reference to the above-mentioned drawing, reference numeral 10 refers in its entirety to a device for detecting a non-optimal lubrication condition in a compressor or a refrigeration system which, according to the present invention, has a special peculiarity in that it comprises a transducer unit 11 designed to detect sound vibrations and to emit an electrical signal according to the frequency of said sound vibrations.

The device 10 of the present invention is configured so as to be fixed to an external wall of a compressor 100 in such a way that, in use, said transducer unit 11 detects sound vibrations which are emitted by the compressor 100.

The transducer unit 11 is connectable to an electronic device for processing said electrical signal so as to signal if, in use, said frequency exceeds a predefined threshold that corresponds to a non-optimal lubrication condition of the compressor 100.

Use of a device 10 according to the present invention thus enables detecting sound vibrations emitted by the compressor 100 during the functioning thereof and evaluating whether the frequency of these vibrations varies, in particular if it rises, as will be described in more detail below.

In fact it has been shown that the sound vibrations emitted by a compressor 100 during functioning thereof are emitted in part by the lubricated movement of the components thereof, such as the compression member 105, which in the solution given by way of example is constituted by compression spirals, and the bearings 106 that support them.

It has also been shown that the sound vibrations emitted by a compressor during functioning thereof have mean frequencies that increase if the lubrication of the components in motion reduces.

The present invention is therefore based on monitoring the sound vibrations emitted by a compressor during the functioning thereof so as to detect whether the mean frequency of the vibrations increases beyond a predefined threshold of lubrication that is still sufficient for efficient functioning of the compressor but which, if the degree of lubrication were to fall further, the functionality of the compressor might be compromised due to the risk of breakage or damage of the moving components, which increases as the level of lubrication diminishes.

With the use of a device according to the present invention, it is therefore in general possible to detect, in a non-invasive way, on a compressor, a possible condition of incipient insufficiency of lubrication, enabling a timely reaction on the part of an operator or automatically.

For example, an application of the present invention can refer to a refrigeration system 1000 which comprises a compressor 100 connected to a refrigeration circuit 101 and a device 10, according to the present invention, applied to the compressor 100 which in the preferred case is advantageously of the scroll type.

During the functioning of the refrigeration system 1000 the lubricant originally predisposed in the compressor 100 is drawn into the refrigeration circuit 101 by the heat carrier fluid which is circulated by the action of the compressor 100.

In the preferred case, the compressor is activated by an adjustable-speed motor by means of control via an inverter.

When the compressor 100 works at low revolutions and, consequently, the heat carrier fluid flows slowly in the refrigeration circuit 101, the lubricant drawn by the heat carrier fluid tends to collect in some parts of the refrigeration circuit 101 outside the compressor 100.

This fact determines a reduction of the lubrication available inside the compressor 100 for lubrication of the compressor 100 and, further, can reduce the efficiency of the refrigeration system, as the heat exchange capacity of the lubricant distributed through the circuit is much lower than that of the heat carrier fluid.

The reduction of the quantity of lubricant in the compressor determines an increase in the frequency of the sound vibrations emitted by the compressor.

The device 10 detects this increase and emits a signal, on exceeding the mean frequency of a predefined safety threshold.

The refrigeration system 1000 according to the invention comprises an electronic control device 101 which is electronically connected to the device 10 for receiving said signal.

According to the present invention, when it receives said signal or when it receives a signal indicating the exceeding of said safety threshold value, the electronic device 101 activates the compressor 100 so as to increase the functioning speed thereof and thus increase the velocity of the heat carrier fluid inside the refrigeration circuit 101 so as to obtain the return drawing to the compressor 100 of the lubricant dispersed throughout the refrigeration circuit 101.

The time for which the compressor 100 is activated at a high rotation speed can be predefined, for example at 10 seconds, or can be variable as a function of the retroactive control based on the mean frequency of the sound vibrations detected by the device 10 during the functioning at said high rotation speed.

This high rotation speed will be defined according to the contingent structural and functional conditions of the refrigeration system 1000 and will be such as to determine a speed of the heat carrier fluid circulating in the refrigeration circuit 101 that is sufficient to obtain an efficient drawing of the lubricant present therein.

Structurally, the transducer unit 11 is advantageously provided with a detection surface 12.

The device 10 advantageously comprises an interface plate 13, preferably made of a metal material, to which the detection surface 12 of the transducer unit 11 is connected, for detecting sound vibrations transmitted through the interface plate 13 by the compressor 100 during the functioning thereof.

The interface plate 13 is configured to be fixed to an outer surface 103 of a wall of a housing 104 of a compressor 100 and is designed to transmit sound vibrations from said wall to said detection surface 12.

The interface plate 13 is preferably profiled in a complementary way to the external face 103 of the compressor 100 to which it is destined to be coupled.

For example, the interface plate can have a working face that extends along a cylindrical surface for adhering to a cylindrical external face 103 of the compressor 100.

The device 10 advantageously comprises a processor unit, not illustrated, connected to the transducer unit 11 for receiving said electrical signal and processing it to detect an increase in the frequency of the sound vibrations emitted in use by the compressor 100, and signalling whether said frequency increases beyond the predefined threshold that is associated with a condition of non-optimal lubrication of the compressor 100.

The transducer unit 11 is, according to the invention, configured to detect sound vibrations having a frequency equal to or higher than 20 KHz.

In particular, said predefined threshold advantageously corresponds to a mean frequency of the sound vibrations emitted by the compressor 100 substantially of 38.4 KHz.

The transducer unit 11 comprises at least one piezoelectric transducer. Further, for simplicity of use and application, the interface plate 13 is magnetically active so as to be removably attached to a metal wall of a compressor 100.

It has thus been observed that the use of a device 10 according to the present invention enables detecting a possible state of insufficient lubrication of a compressor of a refrigeration system, without carrying out any invasive adaptations on the structure of the compressor, as the device 10 is applicable to an external face of the compressor.

Further, the device 10 is easily applicable to compressors of already-existing refrigerator systems, thus avoiding structural adaptations to the compressor itself.

A further aim of the present invention relates to a method for detecting a non-optimal lubrication condition in a compressor of a refrigeration system according to the present invention that comprises:

- detecting a signal indicative of the frequency of sound vibrations emitted by a compressor during operation thereof;
- comparing the value of said signal with a threshold value corresponding to a non-optimal lubrication condition of the compressor.

Said method advantageously comprises a step of increasing the working speed of the compressor to increase the return to the compressor of lubricant dispersed in said refrigeration system.

Said signal is more preferably an electric voltage signal emitted by a piezoelectric transducer mechanically in contact with a wall of the compressor.

A further part of the present invention is formed by a compressor unit 200 comprising at least a compressor 100 provided with a housing 104 and a compression member 105 housed in the housing 104 so as to separate, inside the housing 104, a suction compartment A and a delivery compartment B.

The suction compartment A is configured for collecting a lubricant for the compressor 100.

According to the present invention, said compressor unit 200 has a peculiarity consisting in the fact that it comprises a device 10 according to what is described above, fixed to the housing 104 for detecting sound vibrations emitted by the compressor 100 during operation thereof.

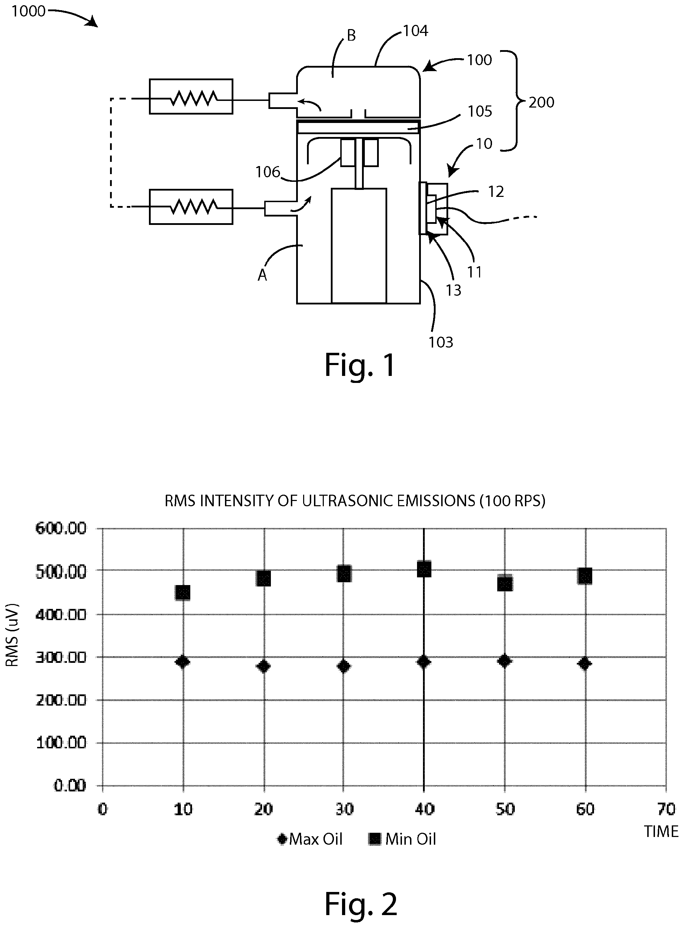

Figure 2 shows a diagram illustrating the result of a test carried out by means of the device according to the present invention.

In detail, said test has been carried out on a test refrigeration circuit having following characteristics:

- Compressor: SCI (Siam Compressor Industry Co. LDT.) ANB42FBDMT with viewing window;
- Compressor weight: 33.4 kg (including lubricant);
- Heat carrier fluid: R410a;
- Lubricant: oil FV50s;
- rated quantity of lubricant: 1.7 kg;
- hydraulic circuit with hot gas by-pass.

In these tests, an ultrasound sensor having the following characteristics has been used as a transducer unit:

- Central frequency (at 20°C): 37.2 kHz $\pm$ 500 Hz;
- RMS sensitivity (from 36.4 to 40.6 kHz): 23.0 mV/g $\pm$ 2 dB;
- Temperature sensitivity: -10 Hz/°C;
- Temperature rage: from -10 a +80 °C;
- Dimensions: 33 x 22 mm;
- Weight: 0.126 kg;

The sensor has been positioned on the housing of the compressor by means of a magnetic interface plate which is curved so as to adhere to the cylindrical shape of the housing.

The distance of the centre of application of the sensor from the rest surface of the compressor is 118 mm.

The environmental conditions of the test were the following:

- Temperature: 28°C;
- Humidity 70%.

The present test consisted in 6 measurements relating to a case of a rated oil level in the compressor housing, represented in the diagram in Figure 2 by rhombi, and 6 measurements relative to the case of a substantial absence of oil in the housing of the compressor, represented in the diagram in Figure 2 by squares, other conditions being equal.

The working conditions of the test were the following:

- Compressor speed = 99.9 rps;

and for the heat carrier fluid:

- Evaporation temperature = +2.6°C;
- Condensation temperature = +59.8°C;
  t Delivery temperature = 81.9°C;
- Overheating = 12K.

In the diagram of Figure 2, the quadratic mean values are shown under the acronym RMS (Root Mean Square) of the outlet voltage of the piezoelectric sensor for each of the 12 measurements, where the voltage detection time was 10 seconds.

In detail, the RMS value of the outlet voltage of the piezoelectric sensor, denoted in its entirety as $V_{RMS}$, was calculated as follows:

$$V_{RMS} = \sqrt{\frac{1}{T}\int_0^T V_m^2 \cos^2(wt)dt}$$

Where T=measurement period and Vm= outlet voltage from the piezoelectric sensor.

The result of said test shows values of the parameter $V_{RMS}$ that are smaller in the case of adequate lubrication of the compressor, which correspond to a lower mean frequency of the sound vibrations emitted by the compressor, and higher $V_{RMS}$ values in the case of insufficient lubrication to which higher frequencies of said sound vibrations correspond.

It has been shown how the present invention attains the set aims and objectives, enabling efficient, reliable and non-invasive detection of a non-optimal state of lubrication of a compressor.

This also enables optimising the functioning of the system, while limiting the presence of lubricant in the refrigeration circuit.

In fact, the lubricant has a lower heat exchange capacity with respect to the heat carrier fluid and the presence thereof in the refrigeration circuit can reduce the action of the heat carrier fluid, consequently reducing the efficiency of the system.

In practice, the materials used, as well as the contingent forms and dimensions, can be varied according to the contingent requirements and the state of the art.

Where the constructional characteristics and the technical characteristics mentioned in the following claims are followed by signs or reference numbers, the signs or reference numbers have been used only with the aim of increasing the intelligibility of the claims themselves and, consequently, they do not constitute in any way a limitation to the interpretation of each element identified, purely by way of example, by the signs or reference numerals.

## Claims

1. A device (10) for detecting a non-optimal lubrication condition in a compressor (100) of a refrigeration system (1000), comprising a transducer unit (11) adapted to detect sound vibrations and emit an electrical signal according to the frequency of the said sound vibrations; the said detecting device (10), is configured to be fixed to an external wall of a compressor (100) in such a way that, in use, the said transducer unit (11) detects sound vibrations which are emitted from the said compressor (100); the said transducer unit (11) is connected to an electronic device for processing the said electric signal so as to signal if, in use, the said frequency exceeds a predefined threshold that corresponds to a non-optimal lubrication condition of the compressor (100); **characterized in that** the transducer unit (11) is configured to detect sound vibrations having a frequency equal to or higher than 20 KHz.

2. Detecting device (10) according to claim 1 **characterized in that** said transducer unit (11) is equipped with a detection surface (12); the said device (10) comprises an interface plate (13) to which the detection surface (12) of the said transducer unit (11) is connected, for detecting sound vibrations transmitted from the said interface plate (13); the said interface plate (13) is configured to be fixed to an outer surface (103) of a wall of a housing (104) of a compressor (100) and being adapted to transmit sound vibrations from the said wall to the said surface detection (12).

3. Detecting device (10) according to one of the preceding claims **characterized in that** the said transducer unit (11) comprises at least one piezoelectric transducer.

4. Detecting device (10) according to one of the preceding claims **characterized in that** the said interface plate (panel, plaque) (13) is magnetically active to be attached/detached to/from a metal wall of a compressor.

5. Detecting device (10) according to one of the preceding claims wherein said predefined threshold corresponds to a mean frequency of the sound vibrations emitted by the compressor substantially of 38.4 KHz.

6. Method for detecting a non-optimal lubrication condition in a compressor (100) of a refrigeration system (1000) comprising:

   - detecting a signal indicative of the mean frequency of sound vibrations emitted by a compressor (100) during its operation;
   - comparing the value of the said signal with a safety threshold value corresponding to a non-optimal lubrication condition of the compressor (100)- when it receives a signal indicating the exceeding of said safety threshold value, by means of an electronic device activating the compressor (100) so as to increase the functioning speed thereof and thus increase the velocity of a heat carrier fluid inside a refrigeration circuit of the refrigeration system (1000) so as to obtain the return drawing to the compressor (100) of a lubricant dispersed throughout the refrigeration circuit.

7. Method according to claim 6 **characterized in that** the said signal is an electric voltage signal emitted by a piezoelectric transducer mechanically in contact with a wall of the compressor (100).

8. A compressor (100) for refrigeration system (1000) comprising:

   - a housing (104),
   - a compression unit (105) housed in the said housing (104) so as to separate, in the said housing (104), a suction compartment (A) and a delivery compartment (B); the said suction compartment (A) is configured to collect a lubricant to the said compressor (100);

   **characterized in that** it comprises a device (10) according to one of the claims 1 to 5, attached to the said housing (104) for detecting sound vibrations emitted by the said compressor (100) during its operation.

## Patentansprüche

1. Vorrichtung (10) zum Erfassen eines nicht-optimalen Schmierzustands in einem Kompressor (100) eines Kühlsystems (1000), aufweisend

   eine Wandlereinheit (11), die dafür angepasst ist, Schallschwingungen zu erfassen und gemäß der Frequenz der Schallschwingungen ein elektrisches Signal auszusenden; wobei die Erfassungsvorrichtung (10) dafür ausgelegt ist, an einer Außenwand eines Kompressors (100) in solcher Weise befestigt zu sein, dass im Einsatz die Wandlereinheit (11) Schallschwingungen erfasst, die vom Kompressor (100) ausgesendet werden; wobei die Wandlereinheit (11) mit einer elektronischen Vorrichtung zum Verarbeiten des elektrischen Signals verbunden ist, um anzuzeigen, wenn im Einsatz die Frequenz einen vorgegebenen Grenzwert überschreitet, der einem nicht-optimalen Schmierzustand des Kompressors (100) entspricht;
   **dadurch gekennzeichnet, dass**
   die Wandlereinheit (11) dafür ausgelegt ist, Schallschwingungen mit einer Frequenz von gleich oder höher als 20 KHz zu erfassen.

2. Erfassungsvorrichtung (10) nach Anspruch 1, **dadurch gekennzeichnet, dass** die Wandlereinheit (11) mit einer Detektionsfläche (12) ausgestattet ist; die Vorrichtung (10) eine Zwischenplatte (13) aufweist, mit der die Detektionsfläche (12) der Wandlereinheit (11) verbunden ist, um Schallschwingungen zu erfassen, die von der Zwischenplatte (13) her übertragen werden; die Zwischenplatte (13) dafür ausgelegt ist, an einer Außenfläche (103) einer Wand eines Gehäuses (104) des Kompressors (100) befestigt zu werden, und die dafür angepasst ist, Schallschwingungen von der Wand auf die Detektionsfläche (12) zu übertragen.

3. Erfassungsvorrichtung (10) nach einem der vorhergehenden Ansprüche, **dadurch gekennzeichnet, dass** die Wandlereinheit (11) mindestens einen piezoelektrischen Wandler aufweist.

4. Erfassungsvorrichtung (10) nach einem der vorhergehenden Ansprüche, **dadurch gekennzeichnet, dass** die Zwischenplatte (Paneel, Plakette) (13) magnetisch aktiv ist, um an einer metallischen Wand des Kompressors angebracht bzw. von dieser gelöst zu werden.

5. Erfassungsvorrichtung (10) nach einem der vorhergehenden Ansprüche, wobei der vorgegebene Grenzwert einer mittleren Frequenz der vom Kompressor ausgesendeten Schallschwingungen in einer Höhe von im Wesentlichen 38,4 KHz entspricht.

6. Verfahren zum Erfassen eines nicht-optimalen Schmierzustands in einem Kompressor (100) eines Kühlsystems (1000), umfassend:

    - Erfassen eines Signals, das die mittlere Frequenz von Schallschwingungen angibt, die von einem Kompressor (100) während seines Betriebs ausgesendet werden;
    - Vergleichen des Wertes des Signals mit einem Sicherheitsschwellenwert, der einem nicht-optimalen Schmierzustand des Kompressors (100) entspricht, wenn ein Signal empfangen wird, das anzeigt, dass der Sicherheitsschwellenwert überschritten wurde, mittels einer elektronischen Vorrichtung, die den Kompressor (100) aktiviert, um dessen Betriebsgeschwindigkeit und somit die Geschwindigkeit eines Wärmeträgerfluids im Inneren eines Kühlkreislaufs des Kühlsystems (1000) zu erhöhen, um die Rückführung eines überall im Kühlkreislauf verteilten Schmiermittels zum Kompressor (100) zu erreichen.

7. Verfahren nach Anspruch 6, **dadurch gekennzeichnet, dass** es sich bei dem Signal um ein elektrisches Spannungssignal handelt, das von dem einen piezoelektrischen Wandler ausgesendet wird, der mit einer Wand des Kompressors (100) mechanisch in Kontakt steht.

8. Kompressor (100) für ein Kühlsystem (1000), aufweisend:

    - ein Gehäuse (104),
    - eine Verdichtungseinheit (105), die in dem Gehäuse (104) untergebracht ist, um in dem Gehäuse (104) eine Ansaugkammer (A) und eine Abgabekammer (B) zu trennen; wobei die Ansaugkammer (A) dafür ausgelegt ist, ein Schmiermittel für den Kompressor (100) zu sammeln;

    **dadurch gekennzeichnet, dass** er eine Vorrichtung (10) nach einem der Ansprüche 1 bis 5 aufweist, die an dem Gehäuse (104) angebracht ist, um Schallschwingungen zu erfassen, die von dem Kompressor (100) während seines Betriebs ausgesendet werden.

## Revendications

1. Dispositif (10) destiné à détecter un état de lubrification non optimale dans un compresseur (100) d'un système de réfrigération (1000), comprenant une unité de transducteur (11) conçue pour détecter des vibrations de son et émettre un signal électrique en fonction de la fréquence desdites vibrations de son ; ledit dispositif de détection (10) est configuré pour être fixé contre une paroi extérieure d'un compresseur (100) de telle sorte que, en cours d'utilisation, ladite unité de transducteur (11) détecte des vibrations de son qui sont émises depuis ledit compresseur (100) ; ladite unité de transducteur (11) est reliée à un dispositif électronique pour traiter ledit signal électrique de manière à signaler si, en cours d'utilisation, ladite fréquence dépasse un seuil prédéfini qui correspond à un état de lubrification non optimale du compresseur (100) ; **caractérisé en ce que** l'unité de transducteur (11) est configurée pour détecter des vibrations de son présentant une fréquence supérieure ou égale à 20 KHz.

2. Dispositif de détection (10) selon la revendication 1 **caractérisé en ce que** ladite unité de transducteur (11) est équipée d'une surface de détection (12) ; ledit dispositif (10) comprend un plateau d'interface (13) auquel la surface de détection (12) de ladite unité de transducteur (11) est reliée, pour détecter des vibrations de son transmises depuis ledit plateau d'interface (13) ; ledit plateau d'interface (13) est configuré pour être fixé contre une surface extérieure (103) d'une paroi d'un logement (104) d'un compresseur (100) et conçu pour transmettre des vibrations de son depuis ladite paroi à ladite surface de détection (12).

3. Dispositif de détection (10) selon l'une des revendications précédentes **caractérisé en ce que** ladite unité de transducteur (11) comprend au moins un transducteur piézoélectrique.

4.  Dispositif de détection (10) selon l'une des revendications précédentes **caractérisé en ce que** ledit plateau (panneau, plaque) d'interface (13) est magnétiquement actif pour être attaché/détaché à /d'une paroi métallique d'un compresseur.

5.  Dispositif de détection (10) selon l'une des revendications précédentes dans lequel ledit seuil prédéfini correspond à une fréquence moyenne des vibrations de son émises par le compresseur d'essentiellement 38,4 KHz.

6.  Procédé destiné à détecter un état de lubrification non optimale dans un compresseur (100) d'un système de réfrigération (1000), comprenant le fait de :

    - détecter un signal indicatif de la fréquence moyenne de vibrations de son émises par un compresseur (100) pendant son exploitation ;
    - comparer la valeur dudit signal à une valeur seuil de sécurité correspondant à un état de lubrification non optimale du compresseur (100) lorsqu'il reçoit un signal indiquant le dépassement de ladite valeur seuil de sécurité, au moyen d'un dispositif électronique activant le compresseur (100) de manière à augmenter la vitesse de fonctionnement de celui-ci et ainsi augmenter la vélocité d'un fluide caloporteur à l'intérieur d'un circuit de réfrigération du système de réfrigération (1000) de manière à obtenir le tracé de retour vers le compresseur (100) d'un lubrifiant dispersé à travers le circuit de réfrigération.

7.  Procédé selon la revendication 6 **caractérisé en ce que** ledit signal est un signal de tension électrique émis par un transducteur piézoélectrique en contact mécanique avec une paroi du compresseur (100).

8.  Compresseur (100) pour un système de réfrigération (1000) comprenant :

    - un logement (104),
    - une unité de compression (105) logée dans ledit logement (104) de manière à séparer, dans ledit logement (104), un compartiment d'aspiration (A) et un compartiment de distribution (B) ; ledit compartiment d'aspiration (A) est configuré pour recueillir un lubrifiant vers ledit compresseur (100) ;

    **caractérisé en ce qu'**il comprend un dispositif (10) selon l'une des revendications 1 à 5, attaché audit logement (104) pour détecter des vibrations de son émises par ledit compresseur (100) pendant son ex-

ploitation.

Fig. 1

Fig. 2

**EP 3 306 236 B1**

**REFERENCES CITED IN THE DESCRIPTION**

**Patent documents cited in the description**

- WO 9220126 A
- EP 0536415 A